# EUROPÄISCHE PATENTANMELDUNG

(11) **EP 1 688 212 A1**
(43) Veröffentlichungstag der Anmeldung: **09.08.2006**
(21) Anmeldenummer: 05002440.5
(22) Anmeldetag: 04.02.2005
(51) Int. Cl.: B23Q 1/01, B23Q 1/62

(54) **X-Y-Schlitten zur hochstabilen Positionierung mit mindestens drei unteren X-Bewegungsführungen**

(71) Anmelder: Schneeberger Holding AG, 4914 Roggwil (CH)
(72) Erfinder: Schaer, Niklaus, 4914 Roggwil (CH); Raible, Adrian, 4784 Niederbipp (CH); Vix, Martin, 5036 Oberentfelden (CH); De Ouate, Javier, 8053 Zürich (CH)
(74) Vertreter: EGLI-EUROPEAN PATENT ATTORNEYS

(57) **Zusammenfassung**

Um bei einem x-y-Positionierungssystem eine höhere Genauigkeit, insbesondere durch ein verbessertes dynamisches Verhalten zu erreichen, wird vorgeschlagen, dass in der unteren Positionierungsebene, die z.B. in der x-Richtung bewegliche Schlitten aufweist, mehr als zwei, vorzugsweise vier Schienen angebracht werden und auf der darüber liegenden Positionierungsebene, die dann in y-Richtung bewegliche Schlitten aufweist, zwei oder alternativ drei Schienen angebracht sind. Die Massnahmen der Erfindung werden dadurch unterstützt, dass die Schienen der unteren Positionierungsebene einen zueinander unterschiedlichen Abstand aufweisen.

## Beschreibung

Die vorliegende Erfindung betrifft eine Vorrichtung zur hochstabilen Positionierung, insbesondere mit Linearbewegungsführungen. Speziell betrifft die vorliegende Erfindung eine Zweiachsenpositioniervorrichtung, bei der mehrere Führungsschlitten auf Führungsschienen beweglich angeordnet sind.

Bei Maschinen sind häufig Linearbewegungsführungen zwischen verschiedenen Maschinenkomponenten auszuführen. Ein Beispiel hierfür sind Werkzeugmaschinen, bei denen für die Ausführung von Bearbeitungen zwischen dem Werkzeug und dem Werkstück diese relativ zueinander linear bewegt werden. Zur Ausführung dieser Bewegungen sind üblicherweise in den Maschinen auf Wälzkörpern basierende Linearbewegungsführungen vorgesehen, die in vielfacher Weise vorbekannt sind. Ein erster prinzipieller Aufbau von Linearbewegungsführungen sieht einen auf einer Führungsschiene angeordneten Führungskörper vor, der mit in einem oder mehreren Endlos-Wälzkörperumläufen angeordneten Wälzkörpern an der Schiene längs verschiebbar ist. Bei einer anderen prinzipiellen Gestaltung von Linearbewegungsführungen sind die Wälzkörper in einer oder mehreren Reihen im wesentlichen linear hintereinander angeordnet. Beiden Linearbewegungsführungen ist gemeinsam, dass sich die Wälzkörper zwischen der Schiene und dem jeweiligen Führungskörper befinden, wobei die Wälzkörper sowohl zur Bewegungs- als auch zur Lastübertragung dienen.

Die genannten Linearbewegungsführungen müssen unterschiedliche Anforderungen erfüllen. So sollen sie zum einen die auftretenden Kräfte mit möglichst geringer bzw. keiner Verformung übertragen können. Zum anderen sollen sie gute Dämpfungseigenschaften aufweisen, damit in der Führung auftretende Schwingungen vermieden, zumindest jedoch gering gehalten werden können.

Eine besondere Ausführung eines Positioniersystems mit Linearbewegungsführungen stellt eine Positionierungsvorrichtung mit mehreren Dimensionen dar. Dabei wird üblicherweise zunächst einmal ein x-y-Positioniersystem ausgebildet, auf das dann allenfalls noch Einrichtungen für eine Bewegung in weiteren Freiheitsgraden aufgesetzt werden können. Dabei kann es sich um einen Theta-Tisch handeln, bei dem dann der dritte Freiheitsgrad als Winkelpositionierung ausgebildet ist oder aber auch um eine Ausbildung einer weiteren Bewegung in der z-Achse. In der vorliegenden Diskussion wird aber zunächst einmal auf eine x-y-Positionierungsvorrichtung eingegangen, da die nachfolgend diskutierte Problematik von den weiterhin aufgesetzten Einrichtungen teilweise oder weitgehend unabhängig zu sein scheinen.

Die x-y-Positioniereinrichtungen, die im Stand der Technik, bekannt sind, verfügen im Allgemeinen über eine Linearbewegungsführung mit zwei Schienen in die erste (x-) Richtung, wobei die Schlitten dieser Linearbewegungsführung dann mit einer Platte verbunden sind. Üblicherweise werden auf jeder der Schienen zwei Schlitten angeordnet, wobei die Zahl der Schlitten auch höher (z.B. 3 Schlitten) sein kann. Auf dieser Platte ist dann üblicherweise eine Linearbewegungsführung wiederum mit zwei Schienen angeordnet und die Schlitten dieser Linearbewegungsführung trägt dann den eigentlichen Aufbau oder die Einrichtungen für die weiteren Freiheitsgrade der Bewegung. Üblicherweise werden auf jeder der oberen Schienen wiederum zwei Schlitten angeordnet, wobei die Zahl der Schlitten auch hier höher (z.B. 3 Schlitten) sein kann.

Für eine hochstabile Positionierung scheinen die Anforderungen mit einem solchen Positionierungssystem aber nicht ohne weiteres erfüllbar zu sein. Insbesondere bei hohen Anfahr- und Abbremsbeschleunigungen hat sich nämlich herausgestellt, dass Schwingungen auftreten, die die Genauigkeit und Wiederholbarkeit bei derartig hoher Dynamik begrenzen. Zusätzlich sind die statische Verformung und die Schwingungen im Stillstand unannehmbar hoch. Ein Ziel der Erfindung ist also eine grundsätzlich höhere Steifigkeit.

Eine solche Positionierungsvorrichtung gilt es im Rahmen der vorliegenden Erfindung also weiter zu entwickeln. Bei der Entwicklung wurde die Lehre der US-6 509 142 berücksichtigt, bei der eine Vorrichtung und ein Verfahren zum Belichten von grossen Substraten offenbart ist. In der US-6 509 142 wird vorgeschlagen, vier parallele Schienen anzuordnen, auf der dann vier Schlitten einer Linearbewegungsführung angeordnet sind. Als Zweck für die Massnahmen wird in der US-6 509 142 eine Erhöhung der Stabilität angegeben, was grundsätzlich dem hier angestrebten Erfindungszweck entspricht.

Es hat sich aber herausgestellt, dass die in der US-6 509 142 vorgeschlagenen Massnahmen bei einem x-y-Positionierungssystem nicht ohne weiteres zum Erfolg führen, da nunmehr Schwingungen auftreten, die bei der Anwendung des Belichtens von grossen Substraten entweder nicht auftreten oder keine Rolle spielen. Mit den in der US-6 509 142 vorgeschlagenen Massnahmen allein kann jedenfalls ein x-y Positionierungstisch nicht versehen werden, wenn man die gewünschte hohe Dynamik mit stabilem Positionieren verbinden will.

Die Weiterentwicklung einer gattungsgemässen Vorrichtung (x-y-Positionierungssystem) entsprechend der vorstehend genannten Wunschvorstellungen ergibt damit die Aufgabe der Erfindung.

Die Erfindung löst die Aufgabe durch eine Vorrichtung nach Anspruch 1. Dabei haben die Massnahmen der Erfindung zunächst einmal zur Folge, dass einerseits die Wechselwirkungen der x und der y Positionierung so klein gehalten werden können, dass keine erheblich Beeinträchtigung des dynamischen Verhaltens in Kauf genommen werden muss, wie dies beim Einsatz einer Einrichtung nach US-6 509 142 der Fall wäre.

Im Falle einer symmetrischen Anordnung der Schienen der unteren Linearbewegungsführung bietet sich an, den Antrieb hierfür konventionell mittig anzuordnen.

Besonders vorteilhaft ist ein Verfahren nach Anspruch 7, bei dem - entsprechend dem Vorrichtungsanspruch 1 - ein Verfahren zum hochstabilen Positionieren vorgeschlagen wird.

Weitere vorteilhafte Einzelheiten der Erfindung sind in den abhängigen Ansprüchen dargelegt.

Die vorgenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und technischen Konzeption keinen besonderen Ausnahmebedingungen, so dass die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der dazugehörigen Zeichnungen, in denen - beispielhaft - eine Vorrichtung und ein dazugehöriger Verfahrensablauf zur vorliegenden Erfindung erläutert wird.

In den Zeichnungen zeigen:
- Fig. 1: eine perspektivische Ansicht einer typischen Positioniervorrichtung mit hoher Genauigkeit gemäss einer Ausführung der vorliegenden Erfindung ohne Darstellung der Antriebseinrichtung;

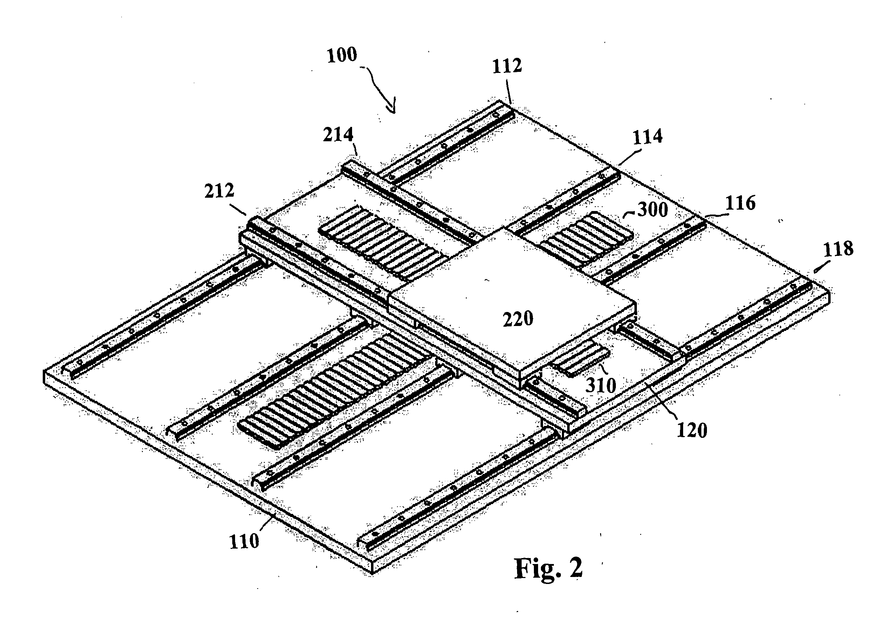

- Fig. 2: eine perspektivische Ansicht der Positioniervorrichtung gemäss der Ausführung nach Figur 1 mit Darstellung der Antriebseinrichtung;

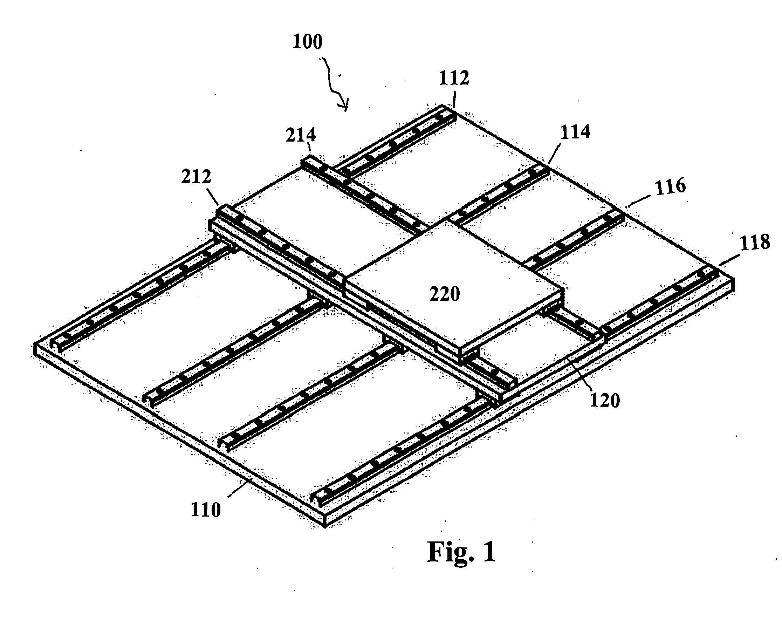

Bei der in Figur 1 als Ganzes mit 100 bezeichneten Positioniervorrichtung sind auf einer Grundplatte 110 vier Schienen 112, 114, 116 und 118 aufmontiert. In der Mitte zwischen den mittleren Schienen ist ein Linearantrieb montiert. Auf jedem der vier Schienen sind zwei Schlitten angebracht, die mit einer Platte 120 verbunden sind. Auf dieser Platte 120 sind wiederum zwei Schienen 212 und 214 angebracht, die wiederum jeweils zwei Schlitten tragen. Eine weitere Platte 220 verbindet die oberen Schlitten und auf dieser Platte 220 ist nunmehr der weitere Aufbau montiert. Im vorliegenden Beispiel ist dies ein Winkelpositionier-(Theta-) Tisch. Die Massnahmen der Erfindung beinhalten in diesem Ausführungsbeispiel, dass der Abstand zwischen den mittleren Schienen 14 und 16 10% kleiner ist als der Abstand zwischen den oberen Schienen 221 und 214. Weiterhin ist in diesem Ausführungsbeispiel der Abstand jeweils zwischen den äusseren Schienen 112, 118 und den mittleren Schienen 114, 116 wiederum um ungefähr 10% unterschiedlich - im gezeichneten Ausführungsbeispiel grösser - wie der Abstand zwischen den oberen Schienen 212 und 214. Im vorliegenden Ausführungsbeispiel sind jeweils in der Mitte der Schienensysteme Linearantriebe 300, 310 angebracht, die die jeweils höheren Elemente bewegen.

Sowohl Kontrollrechnungen als auch experimentelle Untersuchungen haben gezeigt, dass durch diese spezielle Anordnung die Schwingungen, insbesondere die Schwingungen, die beim Beschleunigen und beim Abbremsen auftreten, verkleinert werden und sich insbesondere nicht in die nächste Ebene fortsetzen. Im vorliegenden Ausführungsbeispiel wird dadurch der Gesamtaufbau versteift; die Schwingungsfrequenz wird erhöht.

In einer alternativen Ausführungsform zu der vorliegenden Erfindung ist an Stelle des Drehtischsystems eine Vorrichtung zur Bewegung in die Höhe (z-Richtung) vorgesehen, wobei der Fachmann hier eine beliebige Einrichtung gemäss dem bekannten Stand der Technik wählen kann.

In einer weiteren Ausführung der Erfindung sind in der unteren Ebene nur drei Schienen, jeweils mit zwei Schlitten angeordnet, wobei die mittlere Schiene hier nicht in der Mitte zwischen den beiden äusseren Schienen angeordnet ist, sondern soweit versetzt ist, dass sich die Schienenabstände um ca. 10% unterscheiden. In diesem Fall ist ein Linearantrieb zwischen den beiden Schienen mit dem grösseren Abstand angeordnet. Grundsätzlich können die Vorteile der Erfindung auch durch diese Anordnung verwirklicht werden, wobei die Anordnung mit vier Schienen für das untere Linearführungssystem vergleichsweise eine höhere Dynamik zulässt.

## Patentansprüche

1. Vorrichtung (100) zum Positionieren einer Aufbaueinrichtung in zumindest zwei Achsen, wobei die genannten Achsen im wesentlichen senkrecht aufeinander stehen (x-y-Positionierung),
mit einer ersten, unteren Linearbewegungsführung (300) mit mehreren Schienen (112, 114, 116, 118) und jeweils auf den Schienen (112, 114, 116, 118) angeordneten Schlitten,
mit einer Verbindungeinrichtung, vorzugsweise einer Platte (120), auf der dann eine zweite, obere Linearbewegungsführung (310) mit mehreren Schienen (212) und jeweils auf den Schienen (212. 214) angeordneten Schlitten montiert ist,
**dadurch gekennzeichnet, dass**
die erste, untere Linearbewegungsführung eine grössere Anzahl von Schienen (112, 114, 116, 118) aufweist als die zweite, obere Linearbewegungsführung, und
sich die Abstände der Schienen (112, 114, 116, 118) der ersten, unteren Linearbewegungsführung zumindest bei einem dieser Abstände von den anderen Abständen unterscheiden.

2. Vorrichtung (100) zum Positionieren einer Aufbaueinrichtung nach Anspruch 1, **dadurch gekennzeichnet, dass** die untere Linearbewegungsführung vier Schienen (112, 114, 116, 118) aufweist, wobei der Abstand der mittleren Schienen (114, 116) zueinander sich um zumindest 10% von den Abständen der äusseren Schienen (112, 118) der unteren Linearbewegungsführung von den mittleren Schienen (114, 116) unterscheidet.

3. Vorrichtung (100) zum hochgenauen Positionieren einer Aufbaueinrichtung nach Anspruch 2, **dadurch gekennzeichnet, dass** die beiden äusseren Abstände im wesentlichen gleich sind.

4. Vorrichtung (100) zum hochgenauen Positionieren einer Aufbaueinrichtung nach Anspruch 2 oder 3, **dadurch gekennzeichnet, dass** die beiden äusseren Abstände der äusseren Schienen (112, 118) der unteren Linearbewegungsführung von den mittleren Schienen (114, 116) kleiner sind als der Abstand der Schienen (212, 214) der zwei Schienen aufweisenden oberen Linearbewegungsführung und der Abstand der mittleren Schienen (114, 116) zueinander grösser ist als der Abstand der Schienen (212, 214) der zwei Schienen aufweisenden oberen Linearbewegungsführung.

5. Vorrichtung (100) zum hochgenauen Positionieren einer Aufbaueinrichtung nach einem der Ansprüche 2 bis 4, **dadurch gekennzeichnet, dass** die genannten Linearbewegungsführungen jeweils einen in etwa mittig zwischen den Schienen (114, 116; 212, 214) angeordneten Antrieb (300, 310) aufweisen.

6. Vorrichtung zum hochgenauen Positionieren einer Aufbaueinrichtung nach einem der vorstehenden Ansprüche, **gekennzeichnet durch** eine Einrichtung zur Bewegung der Aufbaueinrichtung in einer weiteren Achse (z).

7. Vorrichtung zum hochgenauen Positionieren einer Aufbaueinrichtung nach einem der vorstehenden Ansprüche, **gekennzeichnet durch** eine Einrichtung zu einer Drehbewegung der Aufbaueinrichtung (θ).

8. Vorrichtung (100) zum hochgenauen Positionieren einer Aufbaueinrichtung nach Anspruch 1, **dadurch gekennzeichnet, dass** die untere Linearbewegungsführung drei Schienen aufweist, wobei der Abstand der Schienen der unteren Linearbewegungsführung sich um zumindest 10% voneinander unterscheidet.

9. Vorrichtung (100) zum hochgenauen Positionieren einer Aufbaueinrichtung nach Anspruch 8, **dadurch gekennzeichnet, dass** die untere Linearbewegungsführung einen zwischen den Schienen mit dem grösseren Abstand angeordneten Antrieb aufweisen.
